Europäisches Patentamt

European Patent Office

Office européen des brevets

(11) Publication number: **0 296 842**

**A2**

(12) **EUROPEAN PATENT APPLICATION**

(21) Application number: 88305714.3

(51) Int. Cl.⁴: **B23Q 1/08**

(22) Date of filing: 21.06.88

(30) Priority: 26.06.87 GB 8715040

(43) Date of publication of application:
28.12.88 Bulletin 88/52

(84) Designated Contracting States:
DE ES IT

(71) Applicant: **BEAVER MACHINE TOOL SALES LTD.**
**Beaver Works Sweet Briar Road**
**Norwich Norfolk NR6 5AJ(GB)**

(72) Inventor: **Balding, Victor Beaver Machine Tool Sales Limited**
**Beaver Works Sweet Briar Road**
**Norwich Norfolk, NR6 5AJ(GB)**

(74) Representative: **King, James Bertram**
**KINGS PATENT AGENCY LIMITED 73**
**Farringdon Road**
**London EC1M 3JB(GB)**

(54) **Plano-milling machine.**

(57) A machine tool such as a plano-milling machine having a multi-collet spindle head (A) incorporates an indexing device for controlled rotation of the spindle head to present tools to different faces of a workpiece without repositioning the workpiece.

The indexing device incorporates a transmission device (61,62) and a location device (57) each of which preferably is in the form of a Hurth face tooth coupling. The transmission device transmits drive from a drive spindle (50), such as a drive spindle for the collets, to enable the spindle head (A) to be rotated relative to the machine frame (G) when in an engaged condition. The location device maintains the spindle head aligned with the machine frame except when the transmission device is in an engaged condition; the location device is then disengaged to allow rotation of the spindle head by the transmission device.

Preferably the location and transmission devices are interconnected such that at all times at least one is in an engaged condition.

FIG. 3.

## "PLANO-MILLING MACHINE"

This invention relates to a plano-milling machine of the closed planer type, which is to say a machine tool in which heavy workpieces. e.g. of up to ten tons in weight, are moved horizontally through a bridge structure comprising columns on either side of the table on which the workpieces are moved and spanned above the table by a cross-rail carrying the machining head. The head, which has a spindle to which different tools can be fitted, is mounted at the lower end of a slide supported by the cross-rail and is movable both perpendicularly (the Z axis) and horizontally (the Y axis) at right-angles to the table supporting the workpiece to machine the upper surface of the latter.

One such type of plano-milling machine and a head therefor are described and claimed in the specification of our granted GB 2,129,349B. The head for such a type of machine has perpendicularly related collet spindles movable such that tools engaged by the respective collets can be used to work different surfaces of the same workpiece without altering the position of the latter on the table. The head may comprise two, perpendicularly related collet spindles which may be interconnected to be commonly driven and the head may be adapted to be mounted in the machine so as to be displaceable in the direction of the axis of rotation of one of the spindles and at right-angles thereto, so that the attitude (e.g. vertical) of said one spindle axis remains constant, and additionally the head may be rotatable about said one spindle axis to alter the angular position of the other spindle in a plane (e.g. horizontal) to which said one spindle axis is perpendicular. In this way, by suitable rotary indexing movements of the head, a tool engaged by the collet of said other spindle may be presented sequentially to side and end faces of a workpiece without the necessity of reloading the latter on the table. By changing the tools engaged by the collets different operations such as milling, drilling, boring and tapping can be carried out on different surfaces of the workpiece, again without the necessity of reloading the latter, with consequent reduction of set-up time and increased productivity.

The practical and commercial success of a plano-milling machine incorporating a multi-collet spindle head as described in the preceding paragraph requires the provision of reliable and economic means for achieving rotary indexing movements of the head. It is an object of the present invention to provide an improved means for achieving such rotary indexing movements of a head.

In accordance with one of its aspects the present invention teaches that a plano-milling machine and a rotary indexing means therefor comprises location means selectively releasable to permit rotation of the machine head relative to support structure of the machine, drive spindle means for transmitting drive from a drive unit to the head for rotation of collet spindles and transmission means selectively movable from a disengaged to an engaged condition to transmit drive from the drive spindle to the head thereby to cause rotation of the head relative to the machine support structure when said location means is released.

Preferably means is provided to maintain relative alignment of the drive spindle means and head at all times except when the location means secures the machine head against rotation relative to the machine support structure. In consequence when the location means is released any rotation of the head relative to the support structure may be sensed by sensing movement of the drive spindle at a position thereof remote from the head.

The above-described relative alignment may be achieved by providing means. or operating the machine in a manner, whereby the location means is releasable to permit rotation of the machine head only when the transmission is in an engaged condition to transmit drive positively, (i.e. without slippage) from the drive spindle to the head. In such an arrangement preferably control means is provided for ensuring that the drive unit is operable to drive the drive spindle only when the location means is released or the transmission means is in a disengaged condition.

One embodiment of a plano-milling machine and rotary indexing means in accordance with the present invention will now be described, by way of example, with reference to the accompanying drawings, wherein:-

Figure 1 is a general arrangement view of a plano-milling machine in accordance with the present invention,

Figure 2 is a longitudinal sectional view of an upper portion of the vertically movable slide B of Figure 1 in a plane containing the axis of rotation A-A of the vertically orientated collet spindle,

Figure 3 is a longitudinal sectional view, in the plane of Figure 2, of the lower portion of the vertically movable slide B and head A of Figure 1, and

Figure 4 is a longitudinal sectional view of the head A of Figure 1 in a plane parallel to that of the section of Figure 1 and containing the axis of rotation C-C of the horizontally orientated collet spindle.

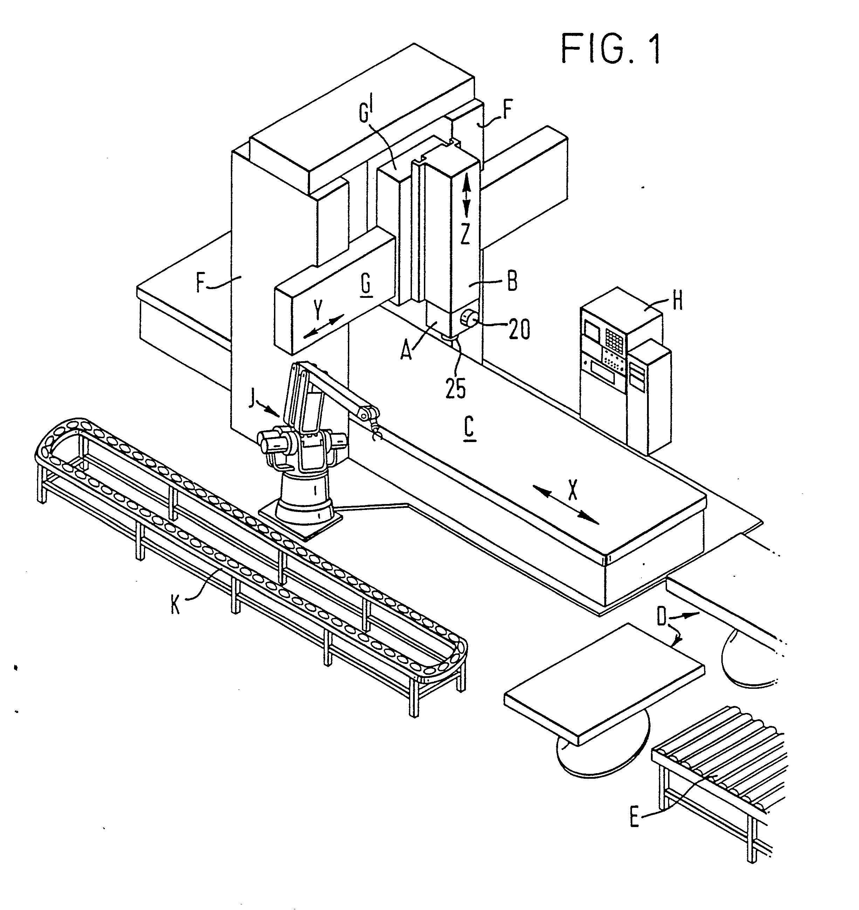

Referring first to Figure 1, the closed planer, plano-milling machine schematically illustrated comprises a horizontal table C over which workpieces (not shown) are movable in the direction indicated "X axis". At the input end of the table (to the right as viewed) a turntable arrangement D is provided for selectively transferring onto the table C workpieces from a plurality of roller conveyors such as E. Columns F on opposite sides of the table C support a bridge G along which a saddle G′ is movable horizontally in a direction ("Y axis") at right-angles to the direction of movement ("X axi") of workpieces along the table C. A slide B is vertically movable ("Z axis") relative to the saddle G′ and carries at its lower end a two-spindle tool-carrying head A. The head A carries a tool in a vertical arbor 25 rotatable about the Z axis for presentation to the upper surface of a workpiece and is rotatable relative to the slide B about the Z axis to present a tool held by a horizontal arbor 20 to different vertical surfaces of a workpiece.

On one side of the table C is a numerical control system H which can be programmed to control a sequence of movements of the saddle G′, slide B and indexed rotation of head A, and on the other side of the table C is a robot arm J which is actuable to replace tools held in the horizontal arbor 20 of the head A and in the vertical arbor 25 thereof, the robot J selecting tools from an endless, movable tool-holder K beside it. The movements of the robot arm J and of the tool-holder K are, of course. co-ordinated so that the arm can replace a tool removed from the head A in its alloted position in the tool-holder K prior to picking up a different tool.

Incorporated in an upper part of the slide B is a drive unit for controlled rotational movement of a drive spindle. Incorporated in a lower part of the slide B is rotary indexing means for selective rotary indexing movement of the head A. Details of the slide, drive unit and indexing means are given below, following a description of the two-spindle tool-carrying head A.

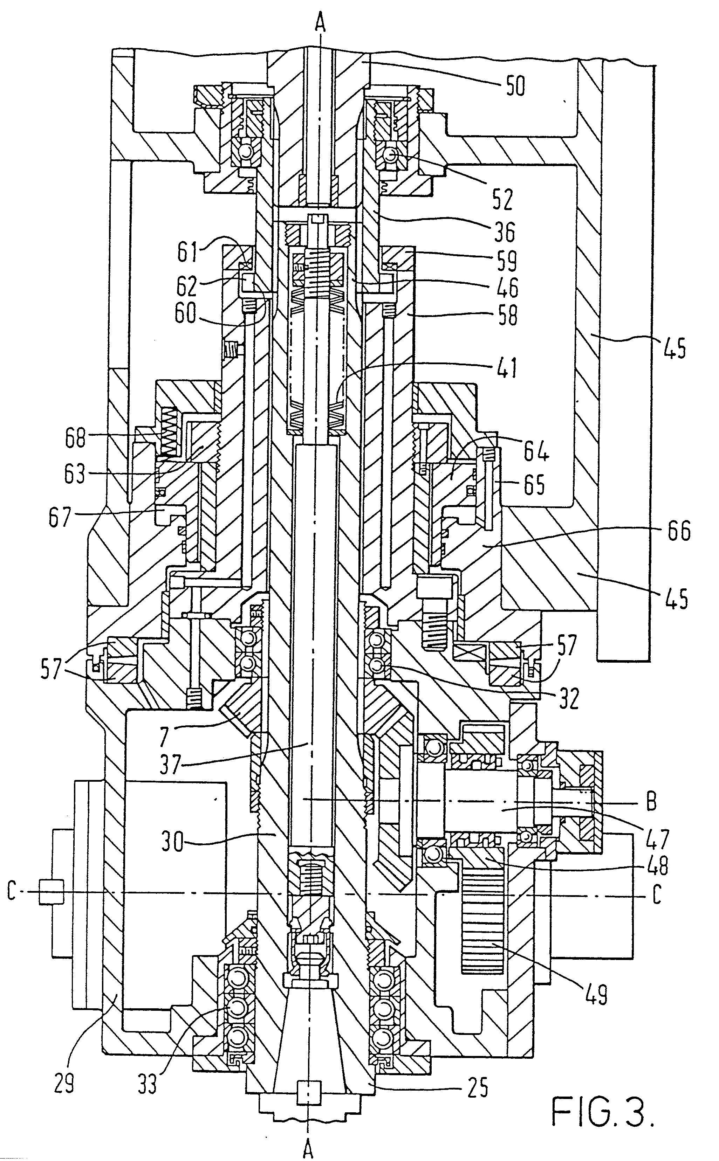

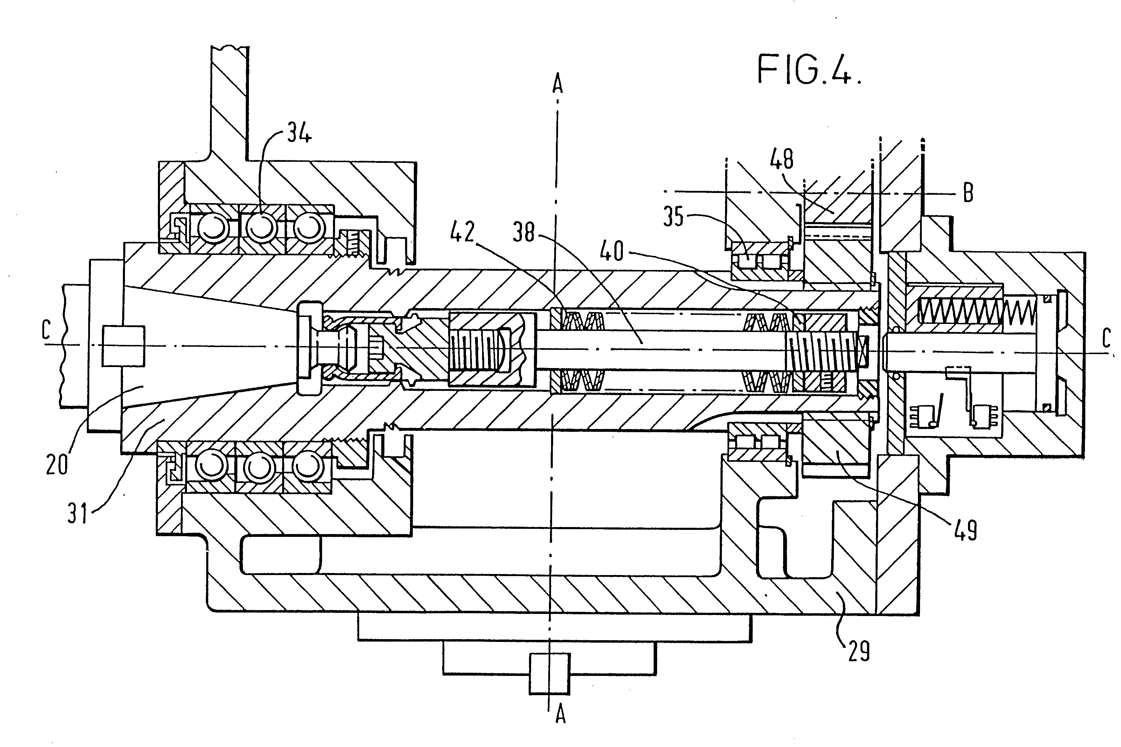

The head A is illustrated in Figures 3 and 4 and comprises a boxlike housing 29 containing the vertical arbor spindle 30 rotational about axis A-A and horizontal arbor spindle 31 (see Figure 4) rotational about axis C-C. The vertical spindle 30 is rotatably supported relative to the housing 29 by upper and lower bearing means 32,33 (see Figure 3). The horizontal spindle 31 is rotatably supported relative to the housing 29 by two bearing means 34,35 axially spaced in the direction of the axis C-C of rotation of the spindle 31.

The vertical spindle 30 extends vertically upwards from the housing 29 and is splined at its upper end 46 for engagement with and rotation by a splined coupling sleeve 36 in the slide B.

Rotational movement of the vertical spindle 30 relative to the housing 29 is transmitted to the horizontal spindle 31 by a pair of interengaged spiral bevel gears 7 mounted one on a horizontal shaft 47 rotational about axis B and the other on the vertical spindle. Rotation of the shaft 47 is transmitted to the horizontal spindle 31 by a pair of spur gears 48,49.

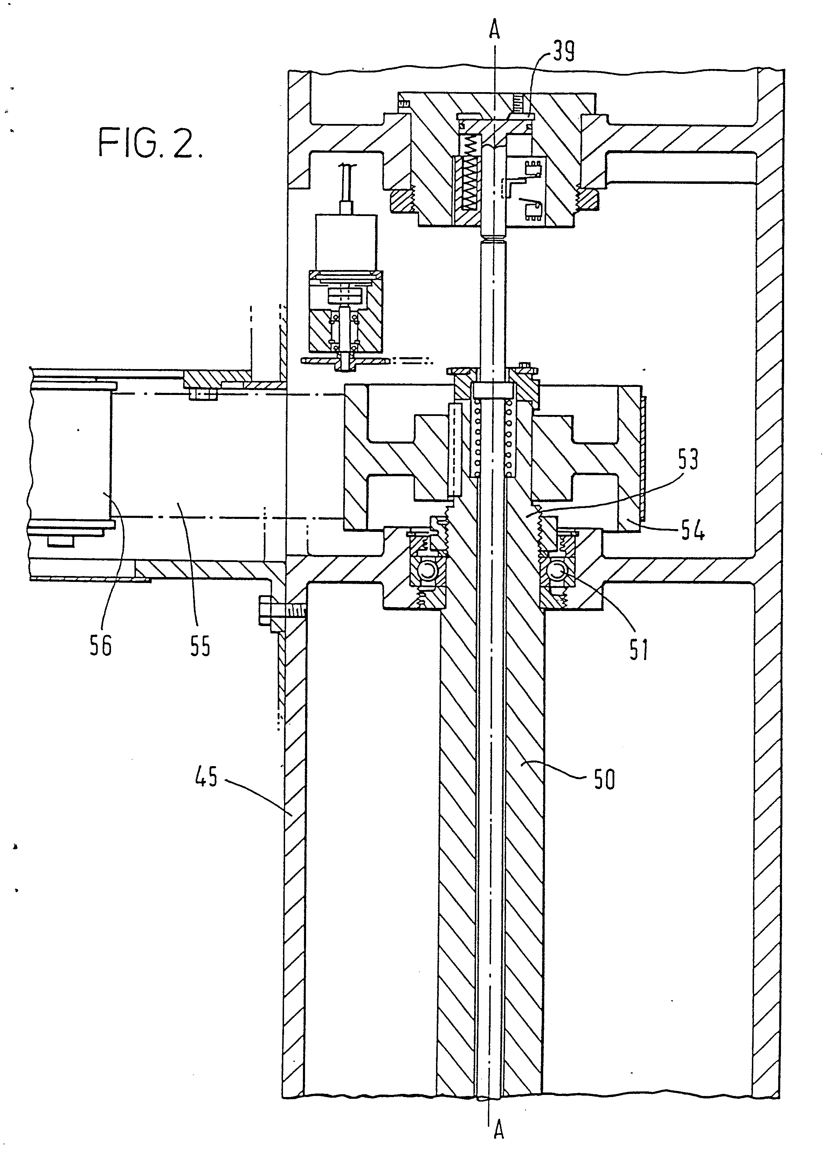

The tool-holding arbor 25,20 of each spindle 30,31 is held by the collet of a spring-loaded draw-bar 30,38. For fully automatic tool changing each spindle 30,31 has at a position remote from the arbor 25,20 an hydraulic cylinder 39 (see Figure 2), 40 (see Figure 4), actuable to compress the spring stacks 41,42 of the draw-bars 37,38.

The slide B will now be described in detail with reference to Figures 2 and 3. The slide comprises a generally hollow, rigid, elongate housing 45 within which a drive spindle 50 is rotatably supported by axially spaced bearings 51,52. At its upper end 53 the drive spindle 50 carries a pulley 54 to which drive is transmitted by a belt 55 from a pulley 56 mounted on the output shaft of an electric motor.

Rotational movement of the drive spindle 50 is transmitted to the vertical spindle 30 via the above-mentioned coupling sleeve 36 which is internally splined along the whole of its length for engagement with splines at a lower end of the drive spindle 50 as well as the splines at the upper end 46 of the vertical spindle. The portion of the sleeve 36 surrounding the lower end of the drive spindle is supported within the bearing 52, and the vertical spindle 30 is able to slide vertically within the coupling sleeve.

The vertical spindle is shown in its upper position in which the head "A" is locked not being free to rotate relative to the slide housing 45, in which position it is held by hydraulic means described below. Relative rotation is prevented by a first, Hurth face tooth coupling comprising a pair of annular ring gears 57 selectively engageable with one another around their entire peripheries upon axial movement towards one another. One ring gear is rigidly secured to the head housing 29 and the other is rigidly secured to the lower end of the slide housing 45.

Also rigidly attached to the head housing 29 is a support sleeve 58 which extends upwards around the vertical spindle and a lower end of the coupling sleeve 36. A radially inwardly projecting housing flange 59 is rigidly attached and keyed to the upper end of the support sleeve, the flange extending inwardly into close proximity with the outer surface of the coupling sleeve. The lower end of the coupling sleeve carries a radially outwardly extending flange 60 and confronting annular axially facing surfaces of the flanges 59,60 are provided with respective gear rings 61,62 of a second face tooth coupling.

At approximately midway along its length the support sleeve 58 is surrounded by a locknut 63 secured thereto. The locknut rests on an annular piston 64 which is vertically slideable in the cylindrical portion 65 of a casting 66 attached to the lower end of the slide housing 45. Means (not shown) is provided for selectively applying pressurised fluid to a chamber 67 defined by the annular space between the piston 64 and casting 66.

The dimensioning and spacing of the components carrying the two couplings, and which comprise at least in part the rotary indexing means, is such that when the vertical spindle is in a raised position (as shown in Figure 3) the first coupling is engaged and the second coupling is disengaged. When the vertical spindle is at the lower position (to which it is normally urged by springs 68) the first, Hurth coupling is disengaged and the second is engaged. The dimensioning and spacing of the couplings is selected such that at least one of the two couplings is always in an engaged condition, it thereby being ensured that rotational alignment between the drive spindle and head housing is maintained at all times except when the first, Hurth coupling secures the head housing 29 against rotation relative to the slide housing 45.

The manner of operation of the machine and in particular the indexing mechanism will now be described.

For machining operations pressurised hydraulic fluid is applied to the chamber 67 to cause the piston 64 to act on the locknut 63 and urge upwards the associated support sleeve 58 and head A. In consequence the respective gear rings 57 of the first, Hurth coupling are brought into engagement and the head A is thereby rigidly locked against rotation relative to the slide notwithstanding the forces arising due to machining operations as the spindle 50 rotates at high speed.

In order to index the head through a required angle of movement relative to the slide housing, control means (not shown) operates to stop rotation of the drive spindle 50 and then depressurise the hydraulic fluid in chamber 67. In consequence the head will fall to the lower position, assisted by the action of the springs 68, and the two gear rings 57 of the first Hurth coupling will disengage. The weight of the head will then be carried by the coupling sleeve 36 via the then engaged gear rings 61,62 of the second coupling.

The motor is then operated slowly to rotate the drive spindle 50, coupling sleeve 36 and thus head housing 29 at low speed relative to the slide housing 45.

This rotation is monitored by a proximity switch (not shown) so that when the desired quadrant (or other selected position) has been reached the motor stops.

Hydraulic pressure is then reapplied to the chamber 67 to re-engage the first, Hurth coupling and disengage the second coupling gears 61.62. When this movement, as monitored by another proximity switch (not shown) has been completed. the motor may be operated at high speed again to drive the vertical and horizontal spindles for further machining operations.

## Claims

1. A rotary indexing means for a plano-milling machine characterised in that it comprises location means (57) selectively releasable to permit rotation of a machine head (A) relative to support structure (G) of the machine, drive spindle means (50) for transmitting drive from a drive unit (56) to the head (A) for rotation of collet spindles (30,31) and transmission means (61,62) selectively movable from a disengaged to an engaged condition to transmit drive from the drive spindle means (50) to the head (A) thereby to cause rotation of the head (A) relative to the machine support structure (G) when said location means (57) is released.

2. A rotary indexing means according to claim 1, characterised in that it comprises means (36,61,62) to maintain relative alignment of the drive spindle means (50) and machine, head (A) at all times except when the location means (57) secures the machine head (A) against rotation relative to the machine support structure (G).

3. A rotary indexing means according to claim 2, characterised in that it comprises means to sense rotation of the machine head (A) relative to the machine support structure (G) when the location means (57) is released.

4. A rotary indexing means according to any one of the preceding claims, characterised in that it comprises control means operable to ensure that the drive unit (56) is operable to drive the drive spindle means (50) only when the location means (57) is released or the transmission means (61,62) is in a disengaged condition.

5. A rotary indexing means according to any one of the preceding claims, characterised in that said location means comprises a pair of annular ring gears (57) selectively engageable with one another around their entire peripheries upon axial movement towards one another.

6. A rotary indexing means according to any one of the preceding claims, characterised in that a collet spindle (30) is rotatable coaxially with the drive spindle means (50) via a splined coupling device (36) and is movable axially relative to the drive spindle means (56) in unison with the machine head (A).

7. A rotary indexing means according to any one of the preceding claims, characterised in that the transmission means comprises a pair of annular ring gears (61,62) selectively engageable with one another around their entire peripheries upon axial movement towards one another.

8. A rotary indexing means according to claim 11 when depending on claim 10, characterised in that one ring gear (61) is secured non-rotatably relative to the machine head (A) and the other ring gear (62) is secured non-rotatably relative to said splined coupling device (36).

9. A rotary indexing means according to claim 7 or claim 8, characterised in that hydraulic actuation means (64-67) is provided and is operable selectively to urge the transmission means ring gears (61,62) out of engagement.

10. A rotary indexing means according to any one of claims 7 to 9, characterised in that spring means (68) is provided and arranged inherently to urge the transmission means ring gears (61,62) to an engaged condition.

# FIG. 1

A

39

FIG. 2.

53

54

51

56

55

45

50

A

FIG.3.

# FIG.4.

EP 0 296 842 A2